Europäisches Patentamt

European Patent Office

Office européen des brevets

(19)

(11) Numéro de publication: **0 158 759**
**A1**

(12)                    **DEMANDE DE BREVET EUROPEEN**

(21) Numéro de dépôt: **84440058.0**

(22) Date de dépôt: **28.11.84**

(51) Int. Cl.⁴: **F 03 B 13/10**

(30) Priorité: **09.12.83 FR 8319890**

(43) Date de publication de la demande:
**23.10.85 Bulletin 85/43**

(84) Etats contractants désignés:
**AT BE DE GB SE**

(71) Demandeur: **Société ESAC S.A.**

**F-70800 Saint Loup sur Semouse(FR)**

(72) Inventeur. **Bassegoda, René**
**Rue Aristide Briand**
**F-70300 Luxeuil Les Bains(FR)**

(74) Mandataire: **Bossard, Jacques-René**
**CABINET ARBOUSSE BASTIDE 20 rue de Copenhague**
**F-67000 Strasbourg(FR)**

(54) **Turbines hydro-électiques.**

(57) Générateur hydro-électrique du type turbine-bulbe, caractérisé en ce qu'il comporte, à l'intérieur d'un carter fermé (1), à la fois une roue (9) à pales orientables préréglées (10), entraînée en rotation par l'écoulement de l'eau provenant d'un distributeur coaxial fixe (13), un multiplicateur (7) dont l'arbre d'entrée (8) est entraîné directement par l'axe de cette roue et une génératrice de courant électrique (4) entrainee directement par l'arbre de sortie (5) de ce multiplicateur tous les organes mécaniques et hydrauliques étant immerges a l'intérieur du bulbe (1), de sorte que la turbine est transportable prête à l'emploi.

FIG. 1

EP 0 158 759 A1

.1.

## TURBINES HYDRO-ELECTRIQUES.

La présente invention concerne les groupes
générateurs hydro-électriques immergés au fil de l'eau,
du type généralement désigné par "turbines-bulbe", et
elle vise plus spécialement un tel générateur dont les
éléments sont conçus et agencés de manière à être regroupés tous ensembles en n'occupant qu'un espace exceptionnellement restreint, ce qui les rend à la fois
plus fiables et compétitifs techniquement et financièrement que les générateurs du même type déjà connus.

A cet effet, la turbine selon l'invention comporte, réunis à l'intérieur d'un carter fermé, à la
fois une roue à pales à orientation préréglée, entraînée en rotation par l'écoulement de l'eau provenant
d'un distributeur fixe coaxial à ce carter, un multiplicateur dont l'arbre d'entrée est entraîné directement par
l'axe de cette roue et une génératrice de courant électrique, entraînée directement par l'arbre de sortie du
multiplicateur.

Il convient de noter que, si l'on peut admettre que chacun de ces éléments est en lui-même connu dans
son principe, il n'a encore jamais été réalisé un tel
ensemble compact entièrement regroupé dans un carter fermé ; notamment la génératrice, le multiplicateur et les
groupes hydrauliques de commande sont usuellement montés
à l'extérieur de la turbine proprement dite, avec les

.2.

inconvénients et les risques mécaniques et hydrauliques qui en résultent. Grâce à l'invention, l'ensemble de ces risques et inconvénients sont éliminés, et un grand nombre d'avantages supplémentaires qui seront énumérés plus loin sont au surplus obtenus.

L'invention, ainsi que ces avantages, seront mieux compris grâce à la description ci-après, correspondant au dessin annexé, sur lequel :

- la figure 1 représente une coupe axiale d'un groupe turbine-bulbe selon l'invention et,

- la figure 2 illustre schématiquement l'implantation d'un tel groupe sur le terrain.

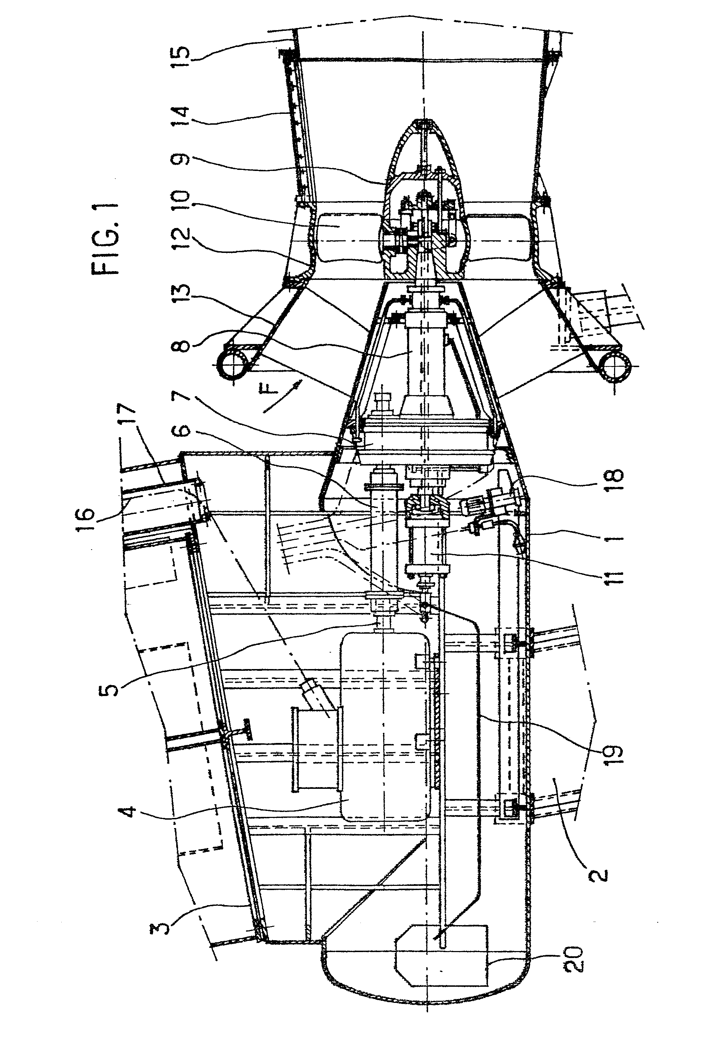

On se réfèrera en premier lieu à la figure 1.

Sur cette figure, on a représenté, regroupés dans un carter ou bulbe 1 monté en place de manière usuelle par un bâti représenté schématiquement en 2 et présentant à la manière usuelle une ouverture d'accès 3, une génératrice 4, dont l'arbre d'entrée 5 est relié par un accouplement 6 à un multiplicateur classique 7 entraîné lui-même par l'arbre de sortie 8 d'une roue 9 équipée de pales 10 orientables grâce à un mécanisme classique de réglage 11, lui-même alimenté par des flexibles hydrauliques 19, dont la force motrice est assurée par un groupe hydraulique 20, cette roue étant elle-même située à l'avant du carter 1, dans un manteau 12, à travers lequel circule l'eau provenant d'un distributeur 13 alimenté suivant la flèche F, l'eau étant ensuite évacuée par une zone blindée 14, scellée elle-même en 15.

Les cables force 16 par lesquels on recueille le courant produit dans la génératrice, sortent du carter 1 par une cheminée 17 juxtaposée au puit de visite donnant accès à l'ouverture 3.

On a représenté en 18 la pompe usuelle d'évacuation des condensations pouvant intervenir dans le fond du carter 1.

Il apparaît donc ainsi que la totalité des

.3.

éléments du groupe générateur ainsi représenté est contenue dans un carter de très petite dimension, grâce à la disposition judicieuse de ces éléments, et notamment la génératrice 4, qui habituellement est nécessairement à l'extérieur du groupe, en raison des dimensions respectives du carter et de la génératrice.

Le caractère compact de l'ensemble conduit à un arbre primaire moteur 8 de très courte dimension, qui sert à la fois d'arbre de la roue et d'arbre primaire du multiplicateur.

Cet assemblage permet deux avantages primordiaux :

- le groupe ainsi conçu est entièrement monté en usine et il suffit sur place de le mettre à sa place prévue, sans l'intervention d'aucun monteur spécialiste sur place. Seul le cablabe électrique du groupe aux armoires électriques est nécessaire ;

- de plus, son caractère bulbe compact avec tous les éléments mécaniques hydrauliques pour la puissance et l'automatisme permet de monter les groupes totalement immergés dans la rivière sans qu'aucune superstructure ne gâche le paysage. Seul un petit bâtiment logeant l'électricité doit être installé à distance. De cette façon, le paysage des rivières est très peu modifié.

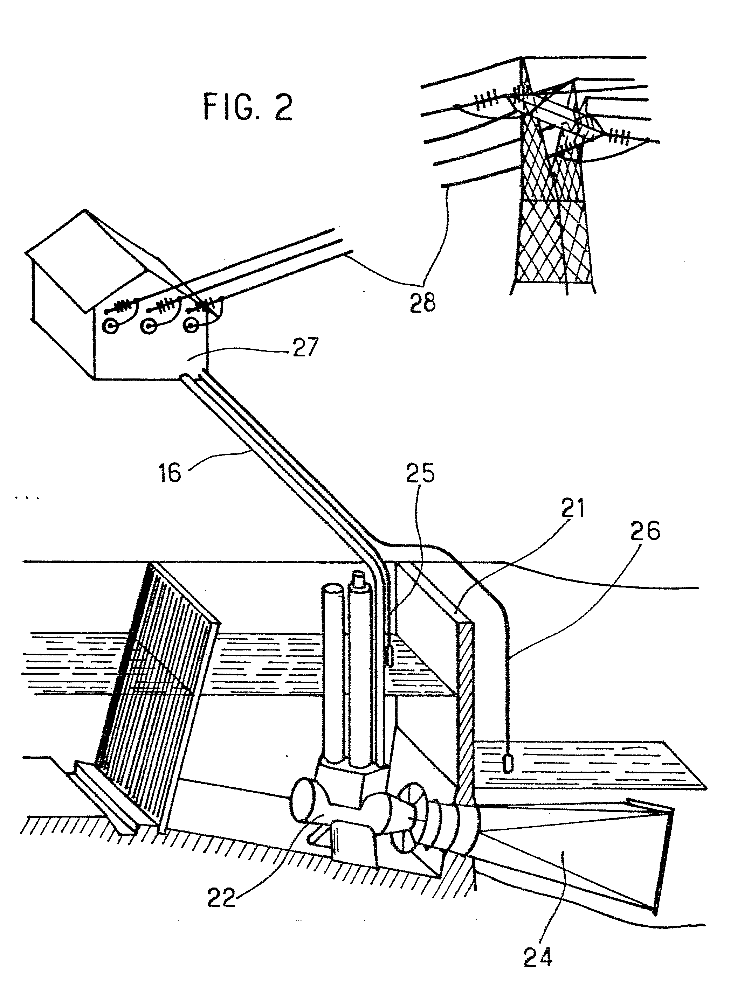

C'est ce qu'illustre schématiquement la figure 2 du dessin, où l'on retrouve, installé sur une retenue 21 d'un cours d'eau, un groupe-bulbe selon l'invention, désigné globalement par 22, protégé en amont par une grille 23, et s'évacuant en aval par 24. Les niveaux sont contrôlés en 25 en amont et en 26 en aval, et transmis au poste de contrôle 27, où aboutissent également les cables 16. Du poste 27 le courant électrique est envoyé au transport 28.

Les expérimentations pratiquées avec ce nouveau groupe ont montré que ce fonctionnement était entièrement satisfaisant et notamment sa compacité le rend particu-

0158759

. 4 .

lièrement fiable, pour un prix de revient tout à fait compétitif avec celui des groupes ne présentant pas ces avantages :

- rendements hydrauliques excellents du fait du caractère axial de ces turbines. Les rendements résulteront des formes hydrauliques sans autres pertes de charge dues à la conception de ce groupe compact ;

- le poids et le coût de l'ensemble mécanique seront réduits d'environ 15 % à techniques comparable du fait du caractère compact de tous ces équipements.

- le bulbe proprement dit est destiné à remplacer des génies civils coûteux et globalement le gain réalisé sur le coût génie civil dans les formules traditionnelles par la réalisation du génie civil additionné du bulbe dans le cas du groupe compact ainsi conçu doit varier de 10 à 30 % ;

- le montage sur place dans le cas de groupes traditionnels est remplacé par le montage en usine. On prévoit d'économiser environ 30 % du temps de montage et le coût de l'heure atelier est lui-même de 30 % inférieur à celui du coût de l'heure de chantier à équipement comparable.

. 5 .

REVENDICATION.


Générateur hydrauélectrique du type turbine-bulbe, caractérisé en ce qu'il comporte, à l'intérieur d'un carter fermé, à la fois une roue à pales orientables préréglées, entraînée en rotation par l'écoulement de l'eau provenant d'un distributeur coaxial fixe, un multiplicateur dont l'arbre d'entrée est entraîné directement par l'axe de cette roue et une génératrice de courant électrique entraînée directement par l'arbre de sortie de ce multiplicateur, tous les organes mécaniques et hydrauliques étant immergés à l'intérieur du bulbe, de sorte que la turbine est transportable prête à l'emploi.

0158759

FIG. 1

0158759

FIG. 2

Office européen
des brevets

**RAPPORT DE RECHERCHE EUROPEENNE**

EP 84 44 0058

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl.4) |
|---|---|---|---|
| Y | US-A-4 289 971 (TSUNEO UEDA) <br> * Colonne 2, ligne 31 - colonne 3, ligne 12 * | 1 | F 03 B 13/10 |
| Y | FR-A-2 350 722 (CREUSOT-LOIRE) <br> * Page 2, lignes 5-38 * | 1 | |
| A | FR-A-1 123 466 (FISCHER) <br> * Page 2, colonne de gauche, lignes 34-56 * | 1 | |
| A | FR-A-1 311 674 (LICENTIA PATENT-VERWALTUNGS GmbH) <br> * Page 1, colonne de droite, lignes 1-13 * | 1 | |

DOMAINES TECHNIQUES
RECHERCHES (Int. Cl.4)

F 03 B

Le présent rapport de recherche a été établi pour toutes les revendications

| Lieu de la recherche <br> LA HAYE | Date d'achèvement de la recherche <br> 26-06-1985 | Examinateur <br> DE WINTER P.E.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82